# EUROPEAN PATENT APPLICATION

(11) **EP 1 780 509 A1**
(43) Date of publication of application: **02.05.2007**
(21) Application number: 05767143.0
(22) Date of filing: 01.08.2005
(51) Int. Cl.: G01C 21/36, G08G 1/0969, G09B 29/00, G09B 29/10

(54) **COMMUNICATION NAVIGATION APPARATUS**

(30) Priority: 10.08.2004 JP 2004233376
(71) Applicant: Pioneer Corporation, Tokyo 153-8654 (JP)
(72) Inventor: SASAKI, Tadashi, c/o Pioneer Corporation, Kawagoe-shi, Saitama 350-8555 (JP)
(74) Representative: Haley, Stephen
(86) International application number: PCT/JP2005/014058
(87) International publication number: WO 2006/016497

(57) **Abstract**

A communication navigation apparatus (102) that predicts planned transit points likely to lead to deviation from a guide route and immediately connects to a communication line with a communication server (101). For example, in the case that a real-time position (P) is located on a link (L), a node (V2) is extracted as transit point information, and connection to the communication line with the communication server (101) is performed. After the node V2 is passed, in the case that the real-time position information P is located on a link L3, because no deviation from the guide route corresponding to guide route information (R) has occurred, a disconnection of the connected communication line is performed. Meanwhile, after the node V2 is passed, when the real-time position information P is located on a link L3a, a deviation from the guide route corresponding to guide route information (R) has occurred; therefore, new guide route information (r) is obtained from the communication server (101).

## Description

The present invention relates to a navigation apparatus, a navigation method of the apparatus, a navigation program, and a recording medium in which information on a guide route to a destination point is set by data communication with a communication server, and that conducts route guidance using the information.

Conventionally, a communication navigation system is disclosed that includes a navigation communication terminal, a communication-center apparatus, and a communication unit that connects therebetween.

In this communication navigation system, information on a guide route to a destination point is set by data communication between the navigation communication terminal and the communication center. Further, the navigation communication terminal, based on the set information on guide route and a real-time position measured by a measuring unit, conducts route guidance for a user (for example, refer to Patent Document 1 below). Hence, in this navigation system, the navigation communication terminal connects a line to a communication center after a moving object deviates from the guide route, and conducts data communications to execute re-search for a guide route (re-routing).

Patent Document 1: Japanese Patent Application Laid-Open Publication No. 2003-75180

### PROBLEM TO BE SOLVED BY THE INVENTION

However, with the above conventional communication navigation system, to set re-routing by data communications, it is required to connect a line between the navigation communication terminal and the communication center and to perform data communication. Accordingly, if deviated from the guide route, the connection of the line between the navigation communication terminal and the communication center, and the data communication are conducted after deviation occurs. Therefore, such a problem is pointed out as one example that it takes time for the line connection and for the data communication, thereby taking time for re-routing.

Further, if time is required for re-routing, such a problem is pointed out as an example that guidance cannot be conducted until a new route is set and the user may experience uneasiness. On the other hand, if it is configured to maintain constant connection to the communication server, such a problem is pointed out as an example that unnecessary occupation of the line increases, a load is placed on the communication-center apparatus, and the speed of data communication of other navigation communication terminals decreases.

### MEANS FOR SOLVING PROBLEM

The communication navigation apparatus according to the invention of claim 1 is a communication navigation apparatus in which information on a guide route to a destination point is set by communication of data with a communication server, and that guides a route using the information, and includes a real-time position information obtaining unit that obtains information on a real-time position of the apparatus; an extracting unit that extracts information on a specific point from among information on points that is included in the information on the guide route; a connecting unit that connects a communication line with the communication server based on the information on the real-time position obtained by the real-time position information obtaining unit and the information on the specific point extracted by the extracting unit.

The navigation method according to the invention of claim 11 is a navigation method of a communication navigation apparatus in which information on a guide route to a destination point is set by communication of data with a communication server, and that guides a route using the information, and includes a real-time position information obtaining step of obtaining information on a real-time position of the apparatus; an extracting step of extracting information on a specific point from among information on points that is included in the information on the guide route; and a connecting step of connecting a communication line with the communication server based on the information on the real-time position obtained at the real-time position information obtaining step and the information on the specific point extracted at the extracting step.

The navigation program according to the invention of claim 12 causes a computer to execute the navigation method according to claim 11.

The recording medium according to the invention of claim 13 is a computer-readable recording medium that stores therein the computer program according to claim 12.

### In the Drawings;

Fig. 1 is an explanatory diagram illustrating a system configuration of a communication navigation system according to an embodiment of the present invention;
Fig. 2 is a block diagram of a hardware configuration of a communication server;
Fig. 3 is a block diagram of a hardware configuration of a communication navigation apparatus;
Fig. 4 is a block diagram of a functional configuration of the communication server;
Fig. 5 is a block diagram of a functional configuration of the communication navigation apparatus;
Fig. 6 is an explanatory diagram illustrating map data and guide route information displayed by the display unit;
Fig. 7 is a flowchart (first) illustrating a procedure of a communication navigation process according to one example of an embodiment;
Fig. 8 is a flowchart (second) illustrating a procedure of the communication navigation process according to one example of the embodiment; and
Fig. 9 is a flowchart (third) illustrating a procedure of the communication navigation process according to one example of the embodiment.

- 100: communication navigation system
- 101: communication system
- 102: communication navigation apparatus
- 103: communication network
- 104: map database
- 120: GPS satellite
- 401: search unit
- 402: communication control unit
- 501: storing unit
- 502: real-time position information obtaining unit
- 503: display unit
- 510: connection control unit
- 511: connecting unit
- 512: distance calculating unit
- 513: travel-time calculating unit
- 514: transit determining unit
- 515: deviation determining unit
- 516: disconnecting unit
- 517: communication state determining unit
- 518: guide-route information obtaining unit

### BEST MODE(S) FOR CARRYING OUT THE INVENTION

With reference to the accompanying drawings, exemplary embodiments of a communication navigation apparatus, and a navigation method, a navigation program, and a recording medium for the communication navigation apparatus according to the present invention are described in detail below.

### (First Embodiment)

### (System Configuration of Communication Navigation System)

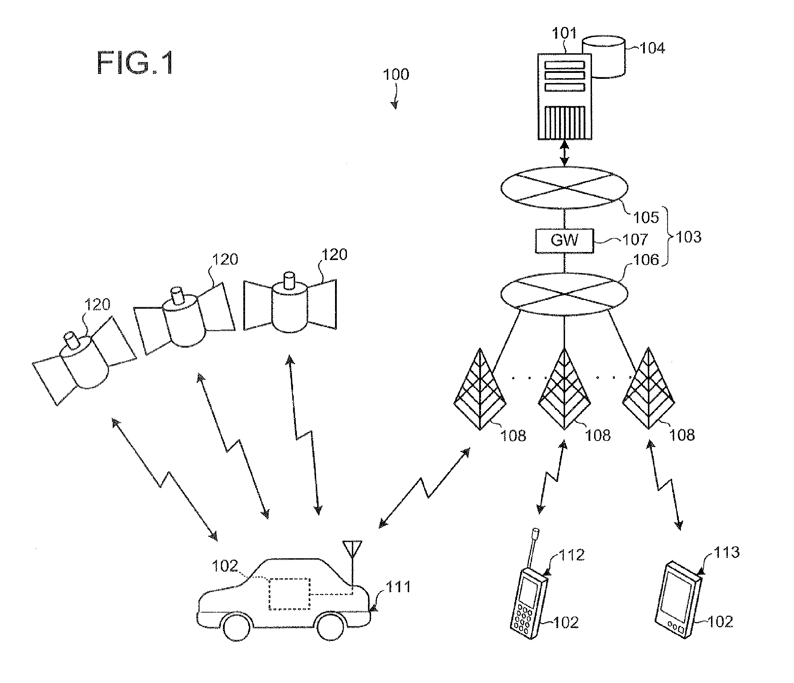

First, a system configuration of a communication navigation system according to an embodiment of the present invention is described. Fig. 1 is an explanatory diagram illustrating a system configuration of the communication navigation system according to the embodiment of the present invention. As shown in Fig. 1, in a communication navigation system 100, a communication server 101 and a communication navigation apparatus 102 are connected via a communication network 103.

The communication server 101 includes a map database 104 and executes a guide route (route) search according to a search request from the communication navigation apparatus 102. In the map database 104, map data is stored. Map data includes background data representing buildings, rivers, ground surfaces, and other landmarks (features) as well as road configuration data representing road configurations and is depicted two-dimensionally or three-dimensionally by the communication navigation apparatus 102.

The background data includes background configuration data representing the configuration of a background and background-type data representing types of backgrounds. The background configuration data, for example, includes representative points of landmarks, polylines, polygons, coordinates of landmarks, etc. Further, the background-type data, for example, includes text data including names, addresses, telephone numbers; and type data of landmarks such as buildings, rivers, etc.

Further, road configuration data is a road network having multiple nodes and links that link the nodes. Nodes represent junctions where multiple streets intersect, such as three-way intersections as a T-shaped intersection, right-angle crossroads, and five-way intersections. Links represent roads. The links include a road having configuration supplement points, and with the configuration supplement points, curved roads can be expressed.

Road configuration data further includes traffic condition data. The traffic condition data, for example, regarding each node, includes information regarding characteristics of complicated intersections such as three-way intersections and five-way intersections, intersections that branch at a slight angle, intersections where intersecting roads do not intersect at right angles, intersections near a destination point, expressway entrances/exits and junctions, intersections having high rates of route deviation as calculated from past travel histories; and for each link, includes information regarding length (distance), width, direction of travel, prohibition of passage, road-type (expressway, toll road, not toll road), etc.

The communication network 103, for example, is formed by a fixed communication network 105 and a mobile communication network 106 connected by a gateway (GW) apparatus 107 for communication protocol conversion. In this communication network 103, IP packet communication can be executed, for example, in a TCP/IP (Transmission Control Protocol/Internet Protocol) environment. The mobile communication network 106 has multiple cellular base stations 108 and executes wireless data communication with the communication navigation apparatus 102.

The communication navigation apparatus 102 is installed as a car navigation apparatus in a mobile object 111 such as a car, or is built into a mobile telephone 112, and a PDA 113. The communication navigation apparatus 102 obtains real-time position information of the communication navigation apparatus 102 by a triangulation method employed by a GPS satellite 120 in space. In the case of the mobile telephone 112 and the PDA 113, it may be configured to obtain the real-time position information through the mobile communication network 106, without using the GPS satellite 120.

### (Hardware Configuration of Communication Server 101)

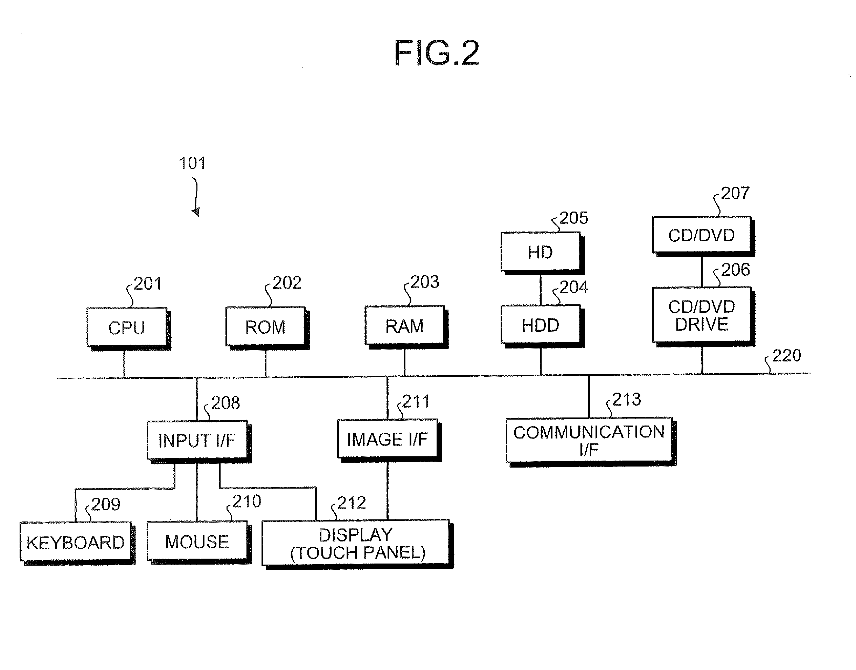

Next, a hardware configuration of the communication server 101 is described. Fig. 2 is a block diagram illustrating the hardware configuration of the communication server 101. As shown in Fig. 2, the communication server 101 includes a CPU 201, a ROM 202, a RAM 203, a HDD (hard disk drive) 204, a HD (hard disk) 205, a CD/DVD drive 206, a CD/DVD 207 as an example of a removable recording medium, an input I/F 208, a keyboard 209, a mouse 210, an image I/F 211, a display (or touch panel) 212, and a communication I/F 213. Furthermore, the respective components 201 to 213 are connected via a bus 220.

Here, the CPU 201 controls the entire communication server 101. The ROM 202 stores programs such as a boot program. The RAM 203 is used as a work area of the CPU 201. The HDD 204, according to the control of the CPU 201, controls the reading/writing of data on the HD 205. The HD 205 stores data written therein under the control of the HDD 204.

The CD/DVD drive 206, according to the control of the CPU 201, controls the reading/writing of data on the CD/DVD 207. The CD/DVD 207 is a removable recording medium that can retrieve data recorded therein according to the control of the CD/DVD drive 206. In addition, as the CD/DVD 207, a writable recording medium can also be used. Furthermore, besides the CD/DVD 207, a CD-ROM (CD-R, CD-RW), an MO, a memory card, etc. may be used as this removable recording medium.

Further, the input I/F 208 inputs data sent from the keyboard 209 and the mouse 210. The keyboard 209 includes keys to input characters, digits, various commands, etc. and executes the input of data. Further, the keyboard 209 may be a touch panel input pad, a numeric key pad, etc.
The mouse 210 moves a cursor, selects a range, or moves a window, changes the window size, etc. Objects having a function similar to a pointing device may be used such as a trackball and a joystick.

Moreover, the image I/F 211 is connected to the display (or touch panel) 212 that is for image display.
The image I/F 211, specifically, for example, is formed by a graphic controller that executes control of the entire display (or touch panel) 212, a buffer memory such as a VRAM (Video RAM) that temporarily stores graphic information that can be instantly displayed, and a control IC that executes display control of the display (or touch panel) 212 based on image data output from the graphic controller.

On the display (or touch panel) 212, icons, cursors, menus, windows, or various types of data such as text and images are displayed. This display (or touch panel) 212, for example, can employ a CRT, a TFT liquid crystal display, an organic light emitting display, a plasma display, etc. Further, in the case of the touch panel 212, which is connected to the input I/F 208, whether a button has been pressed on the touch panel is detected and data is input to the input I/F 208.

Additionally, the communication I/F 213 controls communication with the communication navigation apparatus 102 through the communication network 103. Specifically, the communication I/F 213 is formed by a network connecting apparatus, a communication control apparatus, etc. The network connection apparatus, in the case that the fixed communication network is digital, is formed by a digital terminal apparatus, a router, a firewall, etc. Furthermore, in the case that the fixed communication network is analog, the network connection apparatus may have a configuration including a communication control apparatus, a modulator and demodulator, etc. In addition, the communication control apparatus executes a communication protocol, for example, TCP/IP with the communication network 103, according to the operation of the network connecting apparatus.

### (Hardware Configuration of the Communication Navigation Apparatus 102)

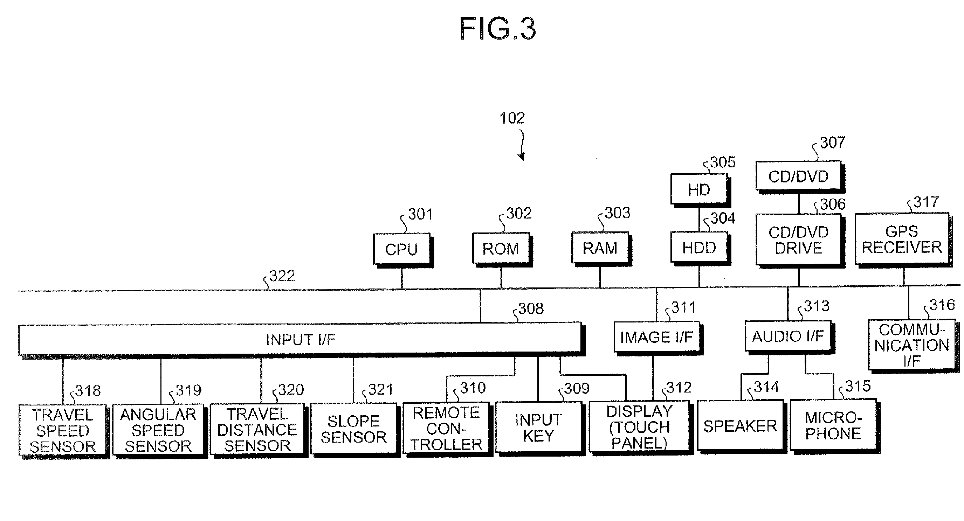

Next, a hardware configuration of the communication navigation apparatus 102 is described. Fig. 3 is a block diagram illustrating the hardware configuration of the communication navigation apparatus 102. As shown in Fig. 3, the communication navigation apparatus 102 is formed by a CPU 301, a ROM 302, a RAM 303, a HDD (hard disk drive) 304, a HD (hard disk) 305, a CD/DVD drive 306, a CD/DVD 307 as an example of a removable recording medium, a input I/F (interface) 308, a input key 309, a remote controller 310, a image I/F (interface) 311, a display (or touch panel) 312, a audio I/F (interface) 313, a speaker 314, a microphone 315, a communication I/F (interface) 316, a GPS receiver 317, a travel speed sensor 318, a angular speed sensor 319, a travel distance sensor 320, and a slope sensor 321. Further, the respective components 301 to 321 are connected via a bus 322

Here, the CPU 301 controls the entire communication navigation apparatus 102. The ROM 302 stores programs such as a boot program. The RAM 303 is used as a work area of the CPU 301. The HDD 304 controls the reading/writing of data on the HD 205 according to the control of the CPU 301. The HD 305 stores data written therein under the control of the HDD 304.

The CD/DVD drive 306 controls the reading/writing of data on the CD/DVD 307 according to the control of the CPU 301. The CD/DVD 307 is removable recording medium that can retrieve data recorded therein according to the control of the CD/DVD drive 306. In addition, as the CD/DVD 307, a writable recording medium can also be used. Furthermore, besides the CD/DVD 307, a CD-ROM (CD-R, CD-RW), an MO, a memory card, etc. may be used as this removable recording medium.

Further, the input I/F 308 inputs data sent from the remote controller 310, where the remote controller 310 includes all or any part thereof of the input keys 309 to input characters, digits, various commands, etc. In addition, although not shown, an output I/F is provided as necessary and through this output I/F, a scanner that optically reads texts and images and a printer that prints texts and images can be connected. Furthermore, data from each sensor 318 to 321 described later is input thereto.

Moreover, the image I/F 311 is connected to the display (or touch panel) 312 for image display. The image I/F 311, specifically, for example, is formed by a graphic controller that executes control of the entire display (or touch panel) 312, a buffer memory such as a VRAM (Video RAM) that temporarily stores graphic information that can be instantly displayed, and a control IC that executes display control of the display (or touch panel) 312 based on image data output from the graphic controller.

On the display (or touch panel) 312, icons, cursors, menus, windows, or various types of data such as text and images are displayed. This display 312, for example, can employ a CRT, a TFT liquid crystal display, a plasma display, etc. Further, in the case of the touch panel 312, which is connected to the input I/F 308, whether a button has been pressed on the touch panel is detected and data is input to the input I/F 308.

Further, the audio I/F 313 is connected to the speaker 314 for audio output. The audio I/F 313 is, specifically, for example, formed by a D/A converter that performs D/A conversion on digital audio data, an amplifier that amplifies an analog audio signal that is output from the D/A converter, and an A/D converter that performs A/D conversion on analog audio data. Additionally, the speaker 314 outputs sound. The microphone 315 inputs sound from an external source.

Moreover, the communication I/F 316 is a communication module that performs wireless communication with the communication server 101 through the base station 108. The communication I/F 316, for example, has a similar configuration to a general-purpose mobile telephone device and can employ a PDC (Personal Digital Cellular Telecommunication System), a TDMA, a TDD, or a CDMA configuration of a PHS (Personal Handyphone System). Furthermore, the communication I/F 316 may also employ a configuration in which a general-purpose mobile telephone device is connected to the input I/F 308 by a wired connection (interface connection) or a wireless connection configuration in which a general-purpose mobile telephone device and the input I/F 308 include a weak wireless transceiving unit.

Additionally, the GPS receiver 317 is a device that receives a radio signal from the GPS satellite 120 and obtains a real-time position of an apparatus body.

The travel speed sensor 318 detects a traveling speed of the apparatus body. If the apparatus body is a vehicle, the traveling speed is detected from the transmission shaft on the output side. In addition, the angular speed sensor 319 detects an angular speed when the vehicle is turning and outputs angular speed data and relative bearing data. The travel distance sensor 320 calculates pulses per wheel rotation by counting the number of pulses in a pulse signal having a predetermined cycle and output with wheel rotation, and based on this pulse count per wheel rotation, outputs travel distance information. The slope sensor 321 detects a slope angle of a road surface and outputs slope data.

### (Functional Configuration of the Communication Server 101)

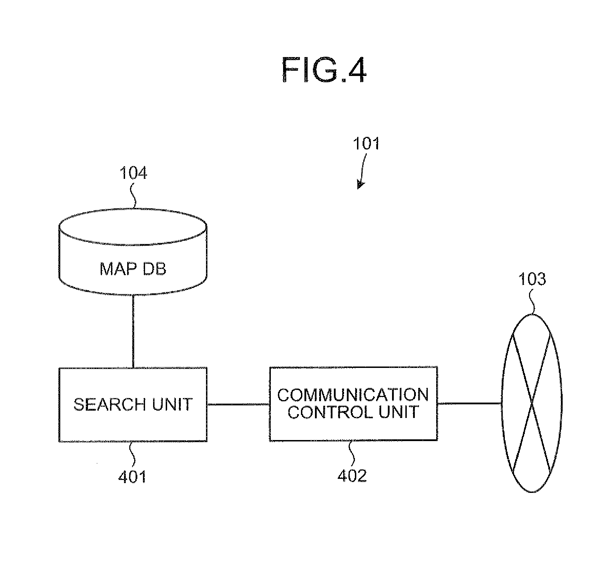

Next, functional configuration of the communication server 101 is described. Fig. 4 is a block diagram of a functional configuration of the communication server 101. As shown in Fig. 4, the communication server 101 includes the map database 104 illustrated in Fig. 1, a search unit 401, and a communication control unit 402.

The search unit 401 searches for a guide route in compliance to a search request from the communication navigation apparatus 102. Specifically, departure point information and destination point information is received from the communication navigation apparatus 102. Data of a certain range of map including this received departure point information and the destination point information is extracted from the map database 104. Using road configuration data included in this extracted data, the search unit 401 computes optimal guide route information by a technique such as Dijkstra's algorithm. Specifically, the search unit 401 realizes this function, for example, through execution, by the CPU 201, of the programs stored on the ROM 202, the RAM 203, the HD 205, the CD/DVD 207, etc. illustrated in Fig. 2.

Further, the communication control unit 402, in compliance to a connection request from the communication navigation apparatus 102, executes connection processing of a communication line with the communication navigation apparatus 102 that has issued the communication request. Furthermore, in compliance to a disconnection request from the communication navigation apparatus 102, disconnection processing of the connected communication line is executed specifically, the communication control unit 402 realizes this function, for example, through the communication I/F 213 illustrated in Fig. 2.

### (Functional Configuration of the Communication Navigation Apparatus 102)

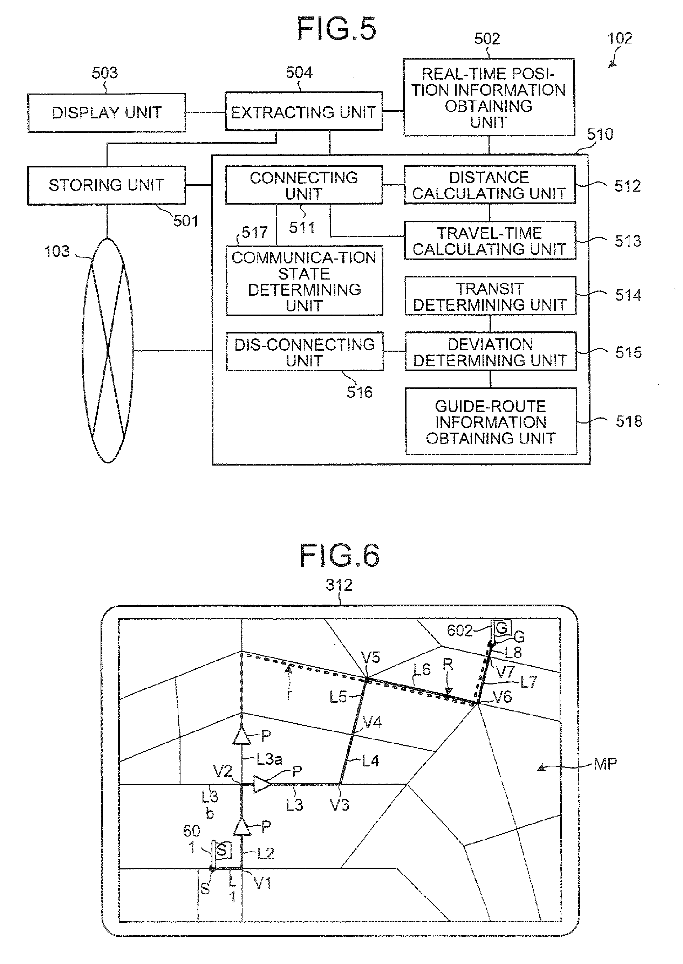

Next, a functional configuration of the communication navigation apparatus 102 is described. Fig. 5 is a block diagram of the functional configuration of the communication navigation apparatus 102. As shown in Fig. 5, the communication navigation apparatus 102 includes a storing unit 501, a real-time position information obtaining unit 502, a display unit 503, and a connection control unit 510.

The storing unit 501 shown in Fig. 5 stores map data received from the communication server 101 and guide route information superposed on the map data. Here, "guide route information" is departure point coordinates (departure point information S) and destination point coordinates (destination point information G), a node Vi ( i=1, 2, 3, ...) of an intersection that is a transit point of the guide route, and a link Lj(j=1, 2, 3, ...) that indicates each route from the departure point through the transit point to the destination point forming link sequence data. In addition, the node Vi has intersection characterization information and can distinguish types of intersections. The link Lj has length (distance) data of corresponding routes.

Furthermore, guide route information, besides the aforementioned link sequence data, can also include detailed map information of a surrounding area of a destination point. Specifically, this storing unit 501 realizes this function, for example, by the RAM 303 or the HD 305 illustrated in Fig. 3.

The real-time position information obtaining unit 502 acquires real-time position information regarding the apparatus body. Specifically, the real-time position information is obtained through correction of GPS location data and absolute direction of travel of the vehicle obtained by the GPS receiver 317, correction made by using each of the data obtained from the travel speed sensor 318, the angular speed sensor 319, the travel distance sensor 320, and the slope sensor 321. This real-time position information, besides three dimensional coordinates (latitude, longitude, height) of the apparatus body and travel direction of the apparatus body, includes data related to speed and acceleration. Specifically, the real-time position information obtaining unit 502 realizes this function, for example, by the GPS receiver 317 and the input I/F 308 illustrated in Fig. 3.

The display unit 503 displays map data and guide route information stored in the storing unit 501. Specifically, the display unit 503, by the image I/F 311 illustrated in Fig. 3, displays map data and guide route information on the display 312. Fig. 6 is a diagram illustrating the map data and guide route information displayed by the display unit 503. In Fig. 6, on the display screen of the display 312, a map data MP and a guide route R are displayed.

A flag 601 indicates the departure point information S of the guide route R and a flag 602 indicates the destination point G of the guide route R. Further, guide route intersections that are transit points through which the apparatus body should pass are indicated by nodes V1 to V7. Moreover, routes showing the guide route between intersections are indicated by links L1 to L8. Further, a real-time position P of the apparatus body is indicated by a triangular mark.

Further, the extracting unit 504 shown in Fig. 5 extracts specific point information from guide route information that includes position information based on real-time position information obtained by the real-time position information obtaining unit 502. This extracting unit 504 can extract planned transit point information about the next transit point that the apparatus body should pass, as specific point information. Further, when the planned transit point information coincides with the destination point information, the extracting unit 504 extracts destination point information.

"Planned transit point information" does not indicate the nodes of transit points that have already been passed, but a node of a transit point having the least distance from the real-time position among the transit point nodes. For example, along the guide route R illustrated in Fig. 6, the "planned transit point information" for the real-time position P corresponds to the node V2.

Further, when guidance is given with a straight route given, deviation from the guide route is less likely to occur. Therefore, the extracting unit 504 may be configured to extract intersections where a left/right turn is required, as the planned transit point information. Thereby, unnecessary occupation of the line to the communication server 101 can be reduced. Further, intersection characterization information of the nodes indicated by the planned transit point information, specifically, in the case of the presence of information regarding complicated intersections such as three-way and five-way intersections, intersections that branch at a slight angle, intersections where intersecting roads do not intersect at right angles, intersections near a destination point, expressway entrances/exits and junctions, intersections having high rates of route deviation as calculated from past travel histories, such information may also be extracted, thereby enabling efficient detection of points that are easily deviated from by a user.

In addition, the connection control unit 510 includes a connecting unit 511, a distance calculating unit 512, a travel-time calculating unit 513, a transit determining unit 514, a deviation determining unit 515, a disconnecting unit 516, a communication state determining unit 517, and a guide-route information obtaining unit 518.

The connecting unit 511 executes connection to a communication line with the communication server 101 based on real-time position information obtained by the real-time position information obtaining unit 502 and on the extracted specific point information extracted by the extracting unit 504. Specifically, through the communication network 103, a connection request is sent to the communication control unit 402 of the communication server 101 and a line connection with the communication server 101 is established.

The distance calculating unit 512 calculates a distance from a real-time position to a specific position based on real-time position information obtained by the real-time position information obtaining unit 502 and on the extracted specific point information extracted by the extracting unit 504. Specifically, the distance from a real-time position to a specific position is calculated using real-time position coordinates included in the real-time position information, link length data of a link indicating a route along which the apparatus body is traveling, and position coordinates of the nodes at both ends of the link.

Furthermore, nodes on each end of a link along which the apparatus body is traveling indicate the node of the transit point just passed by the apparatus body and the node of the next transit point to be passed by the apparatus body. For example, in the situation illustrated in Fig. 6, the distance from the actual real-time position indicated by the real-time position information P to the planned transit point indicated by the node V2 is calculated using the real-time position P, link length data of a link L2 showing the route along which the apparatus body is traveling, and position coordinates of the nodes V1 and V2 on both ends of the link L2. Additionally, in the case that the distance calculated by the distance calculating unit 512 is equal to or less than a predetermined distance, the connecting unit 511 can execute connection to a communication line with the communication server 101.

The travel-time calculating unit 513 further calculates a travel-time from a real-time position to a specific point based on a distance calculated by the distance calculating unit 512 and a traveling speed of the apparatus body. Specifically, the travel-time is calculated by the distance calculated by the distance calculating unit 512 and the traveling speed data included in the real-time position information of the apparatus body. Further, in the case that the travel-time calculated by the travel-time calculating unit 513 is less than or equal to a predetermined time, the connecting unit 511 can connect to a communication line with the communication server 101.

The transit determining unit 514 determines whether the apparatus body has passed a planned transit point, based on the real-time position information obtained by the real-time position information obtaining unit 502 and the planned transit point information extracted by the extracting unit 504. Specifically, when position coordinates of the planned transit point information and position coordinates of the real-time position information coincide, the apparatus body is determined to have reached the planned transit point. Subsequently, when the real-time position coordinates on the guide route information become different from the position coordinates of the planned transit point information, the apparatus body is determined to have passed the planned transit point.

More specifically, in Fig. 6, if the position coordinates of real-time position information P on the link L2 coincide with the position coordinates of the planned transit point information V2, the apparatus body has arrived at the planned transit point corresponding to the planned transit point information V2. Further, the real-time position information P shifts from here to be located on the link L3 (or L3a, L3b) on the guide route information R. In other words, the position coordinates of the real-time position information P no longer coincides with the position coordinates of the planned transit point information V2 and by the coordinates of the real-time position information P coinciding with coordinates on the link L3 (or L3a, L3b), the apparatus body has come to pass the planned transit point corresponding to the planned transit point information V2.

Further, the transit determining unit 514 may also determine whether the apparatus body has arrived at the planned transit point by whether or not the distance calculated by the distance calculating unit 512 has become zero, or by whether the travel-time calculated by the travel-time calculating unit 513 has become zero.

The deviation determining unit 515, when the transit determining unit 514 has determined that the planned transit point has been passed, determines whether the apparatus body has deviated from a guide route based on the real-time position information obtained by the real-time position information obtaining unit 502 and the guide route information. Specifically, after the position coordinates of transit point information and position coordinates of the real-time position information have coincided, determination is made by whether the real-time position information coincides with the coordinate on the link indicating the next route.

For example, in the example shown in Fig. 6, when the real-time position information P has passed the planned transit point information V2 and is located on the link L3, it is determined that deviation has not occurred. When the real-time position information P has passed the planned transit point information V2 and is located on the link L3a (or L3b), it is determined that deviation has occurred.

Furthermore, the disconnecting unit 516, when the deviation determining unit 515 determines that deviation has not have occurred, executes disconnection of the communication line connected to the communication server 101. Specifically, the disconnecting unit 516 sends a disconnection request signal to the communication control unit 402 of the communication server 101 through the communication network 103, and disconnects the line connection established with the communication server 101.

The communication state determining unit 517 determines the state of the communication line with the communication server 101. Specifically, when line communication is not established with the communication server 101, the line state is determined to be not-connected. In this case, the connecting unit 511 can reestablish a connection to the communication line with the communication server 101. Even in the event that the apparatus body is located in a position that is difficult to make a connection to the line, re-establishing a connection can be retried until a connection is established.

For example, when the apparatus body is located in a poor communication environment such as in a tunnel and out of range, the retrying of re-establishing a connection is effective. Meanwhile, in the case that a line connection is established with the communication server 101, the line state is judged to be connected. Further, in the case that an error is detected during the state of connection, the line state is judged to be out of range.

Further, the communication state determining unit 517, for example, executes assessment processing until the planned transit point has been determined to have been passed by the transit determining unit 514. In this case, the connecting unit 511 re-executes connection of the communication line with the communication server 101 when the communication state determining unit determines that the line state is not-connected state, thereby enabling connection to the communication line until the apparatus body arrives at a planned transit point.

Further, the guide-route information obtaining unit 518 obtains information related to the guide route from the real-time position of the apparatus body to the destination point. Specifically, at the startup of the apparatus body, a line connection with the communication server 101 is made, information related to a guide route from this real-time position to a destination point is obtained, and the information is stored in the storing unit 501.

Further, the guide-route information obtaining unit 518, when the deviation determining unit 515 determines that deviation has occurred, obtains new guide route information providing guidance from the real-time position to the destination point based on the real-time position information and the destination point information after the deviation. Specifically, a search request signal, real-time position information, and destination point information is sent to the communication server 101.

At the communication server 101, a route search is executed according to the received search request signal, real-time position information and destination point information. Then, a new guide route information r sent from the communication server 101 is received and the new guide route information r is stored in the storing unit 501. For example, when the real-time position information deviates from the guide route R and is located on the link L3a, the new guide route information r, indicated by the dotted line in Fig. 6, can be obtained.

Further, new guide route information can be obtained from not only the communication server 101, but also from the guide route information, map data, etc. stored in the storing unit 501. In this case, since line connection to the communication server 101 is not necessary, as previously mentioned, it is effective when the apparatus body is located in a poor communication environment such as in a tunnel and out of range.

Moreover, specifically, function of the previously mentioned real-time position information obtaining unit 502, the display unit 503, the extracting unit 504, the connection control unit 510 (the connecting unit 511, the distance calculating unit 512, the travel-time calculating unit 513, the transit determining unit 514, the deviation determining unit 515, the disconnecting unit 516, the communication state determining unit 517, and the guide-route information obtaining unit 518) is realized, for example, by the execution of programs stored in the ROM 302, the RAM 303, the HD 305, the CD/DVD 307, etc. illustrated in Fig. 3.

### EXAMPLE

### (Procedure of Communicating Navigation Processing)

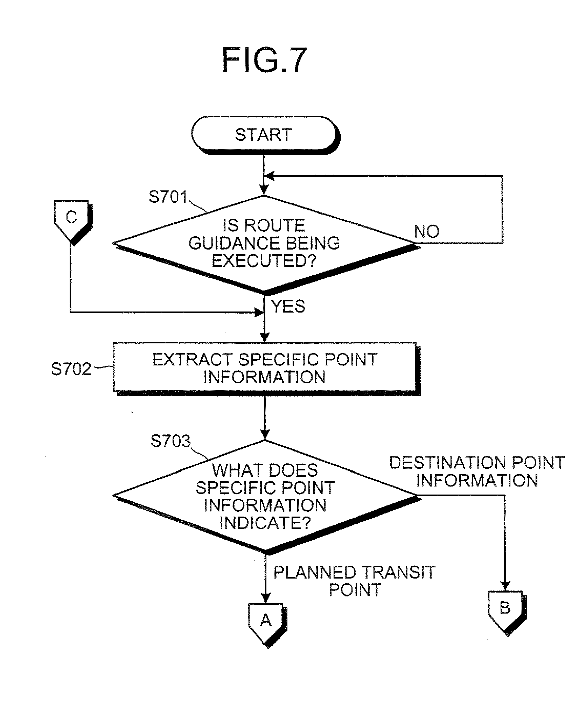

Next, an example of the previously mentioned embodiment is described. Fig. 7 to Fig. 9 are flowcharts illustrating a procedure of a communication navigation processing according to an example of the above embodiment. Guide route information of an apparatus body and vicinity map data included in the guide route information is obtained in advance from the communication server 101 and stored in the storing unit 501.

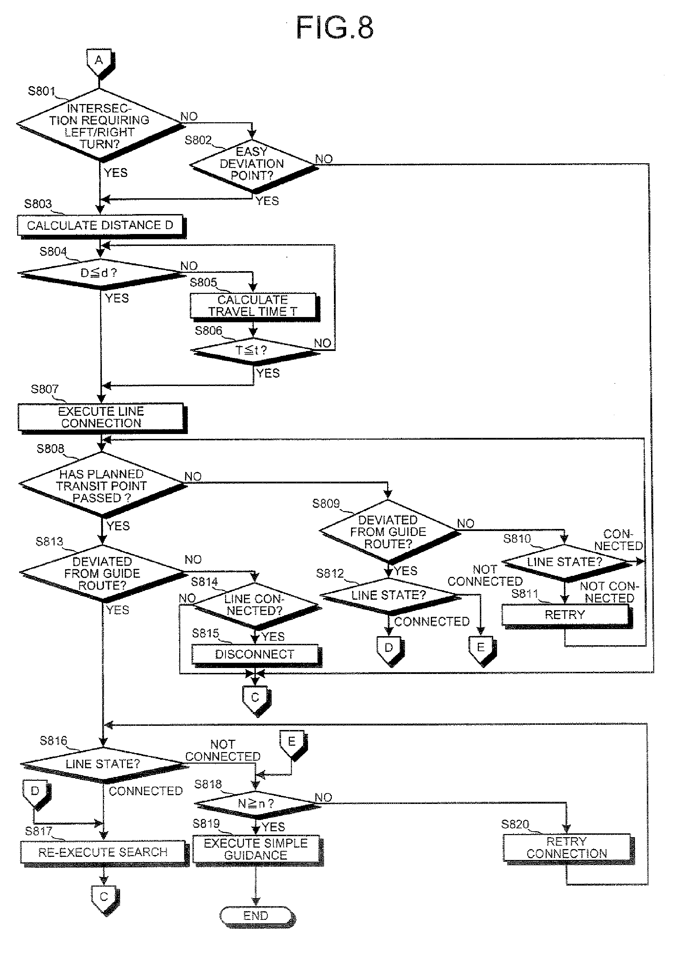

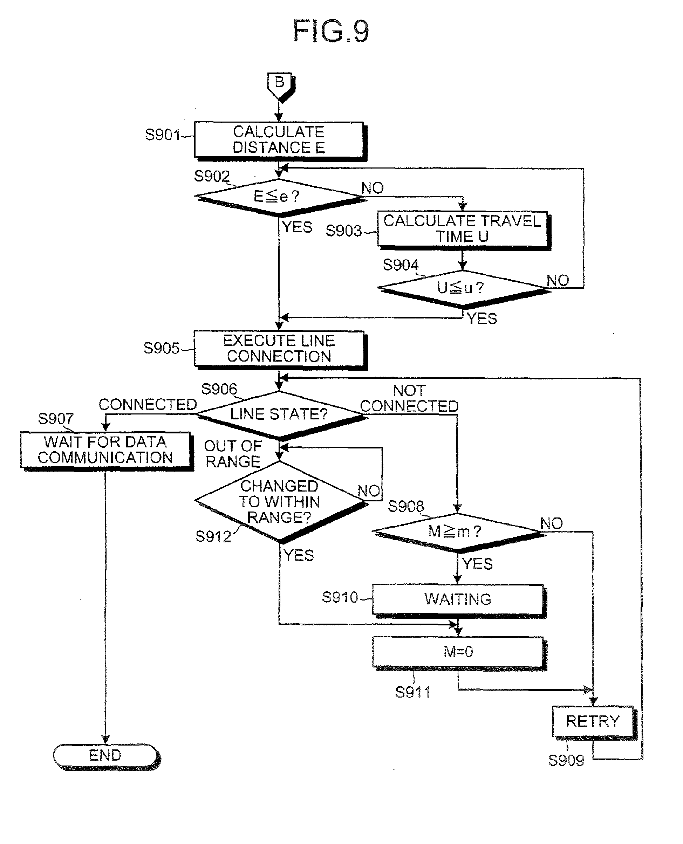

As shown in Fig. 7, first, when route guidance is being executed (step S701: YES), information (specific point information) related to the next expected specific point of arrival on the guide route is extracted (step 8702). When this specific point information is information related to a planned transit point (planned transit point information) (step S703: PLANNED TRANSIT POINT INFORMATION), the procedure shifts over to the flowchart illustrated in Fig. 8. Meanwhile, when the specific point information is information related a destination point (destination point information) (step S703: DESTINATION POINT INFORMATION), the procedure shifts over to the flowchart illustrated in Fig. 9.

When the specific point information is the planned transit point information (step S703: PLANNED TRANSIT POINT INFORMATION), as shown in Fig. 8, determination is made whether the planned transit point indicated by the planned transit point information is an intersection where a left turn or a right turn should be made (step S801). In the case that the planned transit point is not an intersection where a left turn or a right turn should be made (step S801: NO), determination is made whether the planned transit point indicated by the planned transit point information is a point of easy deviation (step S802). This determination, for example, is executed according to intersection characterization information included in the planned transit point information of the node. Moreover, a point of easy deviation is, for example, a three-way or a five-way intersection, an intersection that is not intersect at right angles, expressway entrances/exits, junctions, interchanges, etc. Besides these examples, a road configuration that is a complicated intersection can also be a point of easy deviation.

Then, when the point is determined not to be a point of easy deviation (step S802: NO), the procedure goes to the step S702 illustrated in Fig. 7. Meanwhile, when the planned transit point is an intersection where a left turn or a right turn should be made (step S801: YES), or when the planned transit point is a point of easy deviation (step S802: YES), a distance D, the distance from the real-time position to the planned transit point, is calculated by the distance calculating unit 512 (step S803).

Then, when the calculated distance D is not less than or equal to a predetermined distance d (step S804: NO), a travel-time T from the real-time position to the planned transit point is calculated by the travel-time calculating unit 513 (step S805). The travel-time T is calculated by subtracting the traveling speed of apparatus body from the distance D, the distance from the real-time position to the planned transit point. Instead of the traveling speed of the apparatus body, an average of a previously set traveling speed and the traveling speed up to the present may also be used. In the case that the calculated travel-time T is not within the predetermined time t (step S806: NO), the procedure goes to a step S804. Meanwhile, when the distance D calculated by the distance calculating unit 512 is less than or equal to the predetermined distance d (step 3804: YES), or when the travel-time T calculated by the travel-time calculating unit 513 is within the predetermined time t (step S806: YES), connection to a line with the communication server 101 is executed (step S807) .

Next, whether the apparatus body has passed the planned transit point is determined (step S808). Then, when the apparatus body has not passed the planned transit point (step S808: NO), whether the apparatus body has deviated from the guide route is determined (step S809). When it is determined that the apparatus body has deviated from the guide route (step S809: NO), the state of the communication line with the communication server 101 is determined (step S810). When the state of the communication line is connected (step S810: CONNECTED), the procedure goes to the step S808. When the state of the communication line is not connected (step S810: NOT CONNECTED), connection to a communication line with the communication server 101 is retried (step S811) and the procedure goes to the step S808.

Meanwhile, at the step S809, when the apparatus body is determined to have deviated from the guide route (step S809: YES), the state of the communication line with the communication server 101 is judged (step S812). When the state of the communication line is connected (step S812: CONNECTED), the procedure goes to step S817 described later. Meanwhile, when the state of the communication line is not connected (step S812: NOT CONNECTED), the procedure goes to step S818 described later.

Further, at the step S808, when the planned transit point has been passed (step S808: YES), whether the apparatus body has deviated from the guide route beyond the planned transit point is determined (step S813). When it is determined that the apparatus body has not deviated from the guide route (step S813: NO), because the apparatus body has passed the planned transit point corresponding to the guide route, if the connection is completed to a communication line with the communication server 101 (step S814: YES), disconnection of the communication line is executed (step S815). Then, the procedure goes to the step S702 illustrated in Fig. 7. Further, when connection is not completed to a communication line with the communication server 101, i.e., no connection exists (step S814: NO), the procedure goes to the step S702 illustrated in Fig. 7.

Meanwhile, when it is determined that the apparatus body has deviated from the guide route (step S813: YES), the state of the communication line with the communication server 101 is determined (step S816). When the state of the communication line is connected (step S816: CONNECTED), a search for a guide route is executed again by data communication with the communication server 101 (step S817). Specifically, a route search request, real-time position information, and destination point information are sent to the communication server 101, information related to a new guide route set by the communication server is received, and various types of information, such as guide lines indicating the guide route, are displayed on a display screen. Then, the procedure goes to the step S702 illustrated in Fig. 7.

Meanwhile, when the state of the communication line is not connected (step S816: NOT CONNECTED), whether reconnection to a communication line to the communication server 101 can be retried is determined (step S818). When the number N of reconnection trials is greater than or equal to a predetermined number of trials n (step S818: YES), simple guidance is executed (step 5819).
Specifically, because data communication can not be executed since there is no connection to a communication line with the communication server 101 simple route guidance is executed, using map data and real-time position information stored in the storing unit 501. Meanwhile, when the number of reconnection trials is not greater than or equal to the predetermined number of trials (step S818: NO), connection to a communication line with the communication server 101 is executed again (step S820) and the procedure goes to the step S816.

Further, as shown in Fig. 7, when the planned transit point information is the destination point information (step S703: DESTINATION POINT INFORMATION), as shown in Fig. 9, a distance E from the real-time position to the destination point is calculated by the distance calculating unit 512 (step S901). Then, when the calculated distance E is not less than or equal to a predetermined distance e (step S902: NO), a travel-time U from the real-time position to the destination point is calculated by the travel-time calculating unit 5I3 (step S903). The calculation method for the travel-time U is the same as the calculation method for the aforementioned travel-time T.

When the travel-time U is not within the predetermined time u (step S904: NO), the procedure goes to step S902. Meanwhile, when the distance E calculated by the distance calculating unit 512 is less than or equal to the predetermined distance e (step 5902; YES), or if the travel-time U calculated by the travel-time calculating unit 513 is within the predetermined time u (step S904; YES), connection to a communication line with the communication server 101 is executed (step S905).

Subsequently, the state of the communication line with the communication server 101 is determined (step S906). When the state of the communication line is connected (step S906: CONNECTED), data communication with the communication server is waited for to occur and a series of processing ends. By the data communication with the communication server 101 that occurs in this case, for example, detailed map information of the surrounding area of the destination point, destination point guide information, etc. sent from the communication server 101 is received. Moreover, in this case, at the stage when arrival at the destination point has been detected, disconnection of the communication line may also be executed.

Meanwhile, when the state of the communication line is not connected (step S906: NOT CONNECTED), it is determined whether reconnection to the communication line with the communication server 101 can be executed again (step S908). When the number of reconnection trials M is not greater than or equal to a predetermined number of trials m (step S908: NO), connection to the communication line is retried (step S909). Then, the processing procedure goes to the step S906.

Meanwhile, in the case that the number of reconnection trials M is greater than or equal to the predetermined number of trials m (step S908: YES), it is waited for a predetermined amount of time (step S910). Then, the number of reconnection trials M is reset to zero (step S911) and connection to the communication line is retried (step S909) . Further, when the state of the communication line is out of signal range (step S906: OUT OF RANGE), a change to within signal range is waited for to occur (step S912: NO). Then, when changed to within a signal range (step S912: YES), the number of reconnection trials is reset to zero (step S911), and connection to a communication line with the communication server 101 is retried (step S909).

As described above, by the communication navigation apparatus 102 according to an embodiment of the present invention, by executing a connection to a communication line with the communication server 101 before the apparatus body passes a planned transit point, because of the connected state of the communication line with the communication server 101, even in the case that the apparatus body deviates from the guide route before or after the planned transit point, data communication with the communication server 101 occurs instantly, a search for a new guide route can be executed again, and the time required for a re-route setting can be reduced.

On the other hand, when the apparatus body is following the guide route and passes the planned transit point, disconnection to the connected communication line is executed. In this way, power consumption and communication costs can be reduced by the disconnection of the communication line when the data communication with the communication server 101 is not required. Furthermore, by the reduction in the access to the communication server 101, the load on the communication server 101 can be reduced. In addition, prior to deviation from the guide route, the state of the communication line with the communication server 101 is judged and in the case of no connection, by retrying to connect to the communication line, a non-connected state of the communication line during route deviation can be avoided as much as possible.

Furthermore, in the above mentioned embodiment, execution of communication line connection is conducted using the distance and the travel-time to a planned transit point, however, at least one of the distance and the travel-time may be used. Additionally, in the above mentioned embodiment, first, whether to execute line connection is determined using distance, and then, determined using the travel-time, however, whether to execute line connection may be determined using the travel-time first and then determined using the distance.

Furthermore, prior to distance calculation and travel-time calculation, the extraction of specific point information (planned transit point information or destination point information) is conducted, however, the extraction of specific point information is not conducted only regarding an intersection where a left or right turn is required. Besides intersections requiring a left or right turn, the extracting may be conducted regarding intersections that are easily deviated from, such as three-way or five-way intersections, intersections that do not intersect at right angles, expressway entrances/exits, junctions, and interchanges, thereby enabling detection of more guide route deviations.

Furthermore, besides planned transit points and destination points, a characterization point may be a facility guide point that provides information about a facility in a vicinity of the guide route, where connection to a communication line with the communication server 101 is executed when the apparatus body reaches a given proximity to the guide facility point, and after the apparatus body arrives in a vicinity of the facility guide point, guide information for the facility is received from the communication server, and the information may be presented to the user.

As described above, according to a communication navigation apparatus, a navigation method, a navigation program, and a recording medium, because a connection to a communication line with the communication server 101 can be made before an apparatus body deviates from a guide route by predicting in advance specific points that are easily deviated from, re-route setting can be conducted immediately after guide route deviation occurs.

Therefore, even in the event that a user deviates from a guide route and loses the route to the destination point, in only the time required for data communication, a new guide route can be obtained immediately.

Furthermore, in the event that the apparatus body does not deviate from the guide route, by the disconnection to the communication line with the communication server 101, unnecessary occupation of the line to the communication server 101 can be reduced.

In addition, as with destination points, establishment guide points, etc., guide information for the point vicinity is obtained from the communication server, by executing a connection to a communication line with the communication server 101 at the stage of a reaching a given proximity to a presented point in advance, when this point vicinity is reached, guide information can be immediately obtained from the communication server.

Moreover, the described navigation method according the embodiments of the present invention can be realized through the execution of a program prepared in advance by a computer such as a personal computer and workstation. The program is recorded on a computer-readable recording medium, such as a hard disk, a flexible disk, a CD-ROM, an MO, a DVD, etc., and is executed by being read from the recording medium by a computer. The program may also be a transmission medium that can be distributed through a network, such as the internet.

As above,' the communication navigation apparatus, the navigation method, the navigation program, and the recording medium are useful in, for example, an on-vehicle and mobile-phone navigation.

## Claims

1. A communication navigation apparatus in which information on a guide route to a destination point is set by communication of data with a communication server, and that guides a route using the information, comprising:
a real-time position information obtaining unit that obtains information on a real-time position of the apparatus;
an extracting unit that extracts information on a specific point from among information on points that is included in the information on the guide route;
a connecting unit that connects a communication line with the communication server based on the information on the real-time position obtained by the real-time position information obtaining unit and the information on the specific point extracted by the extracting unit.

2. The communication navigation apparatus according to claim 1, further comprising a distance calculating unit that calculates a distance from the real-time position to the specific point based on the information on the real-time position obtained by the real-time position information obtaining unit and the information on the specific point extracted by the extracting unit, wherein
the connecting unit connects the communication line with the communication server based on the distance calculated by the distance calculating unit.

3. The communication navigation apparatus according to claim 2, further comprising an arrival-time calculating unit that calculates an arrival time required to travel to the specific point from the real-time position based on the distance calculated by the distance calculating unit and a traveling speed of the apparatus, wherein
the connecting unit connects the communication line with the communication server based on the arrival time calculated by the arrival-time calculating unit.

4. The communication navigation apparatus according to claim 1, wherein the extracting unit extracts information on a planned transit point through which the apparatus is to pass next, from among the information on points included in the information on the guide route, as the information on the specific point.

5. The communication navigation apparatus according to claim 4, further comprising:
a passage determining unit that determines whether the apparatus has passed the planned transit point based on the information on the real-time position obtained by the real-time position information obtaining unit and the information on the planned transit point extracted by the extracting unit;
a deviation determining unit that determines whether the apparatus has deviated from the guide route based on the information on the real-time position obtained by the real-time position information obtaining unit and the information on the guide route, when the passage determining unit determines that the planned transit point has been passed; and
a disconnecting unit that disconnects the communication line connected to the communication server, when the deviation determining unit determines that the apparatus has not deviated from the guide route.

6. The communication navigation apparatus according to claim 5, further comprising a communication-state determining unit that determines a state of the communication line with the communication server, wherein
the connecting unit re-connects the communication line with the communication server when the communication-state determining unit determines that the state is no-connection state.

7. The communication navigation apparatus according to claim 6, wherein the communication-state determining unit determines the state of the communication line with the communication server until the passage determining unit determines that the apparatus has passed the planned transit point.

8. The communication navigation apparatus according to claim 4, wherein the extracting unit extracts information on an intersection at which the apparatus is to make any one of a right turn and a left turn, as the information on the planned transit point.

9. The communication navigation apparatus according to claim 4, wherein the extracting unit extracts information on a point to be passed next from among points indicating a three-way intersection, a five-way intersection, an intersection at which streets are not crossed perpendicularly, and an entrance/exit, a junction, and an interchange of an expressway, as the information on the planned transit point.

10. The communication navigation apparatus according to any one of claims 1 to 9, further comprising:
a deviation determining unit that determines whether the apparatus has deviated from the guide route based on the information on the real-time position obtained by the real-time position information obtaining unit and the information on the guide route; and
a guide-route information obtaining unit that obtains information on a guide route from the real-time position of the apparatus after deviation to the destination point through data communication with the communication server, when the deviation determining unit determines that the apparatus has deviated from the guide route.

11. A navigation method of a communication navigation apparatus in which information on a guide route to a destination point is set by communication of data with a communication server, and that guides a route using the information, comprising:
a real-time position information obtaining step of obtaining information on a real-time position of the apparatus;
an extracting step of extracting information on a specific point from among information on points that is included in the information on the guide route; and
a connecting step of connecting a communication line with the communication server based on the information on the real-time position obtained at the real-time position information obtaining step and the information on the specific point extracted at the extracting step.

12. A navigation program that causes a computer to execute the navigation method according to claim 11.

13. A computer-readable recording medium that stores therein the navigation program according to claim 12.
